Europäisches Patentamt

European Patent Office

Office européen des brevets

(19)

(11) EP 0 588 689 B1

(12) **FASCICULE DE BREVET EUROPEEN**

(45) Date de publication et mention
de la délivrance du brevet:
**28.07.1999 Bulletin 1999/30**

(51) Int Cl.6: **C04B 18/10**, C04B 28/06,
C04B 18/02, B09B 3/00

(21) Numéro de dépôt: **93402177.5**

(22) Date de dépôt: **07.09.1993**

(54) **Procédé de traitement des résidus d'incinération de déchets urbains, et produits obtenus**

Verfahren zur Behandlung von Verbrennungsrückständen aus Hausmüll und so erhaltene Produkte

Process for treating incinerator residues of urban waste and products obtained

(84) Etats contractants désignés:
**AT BE CH DE DK ES FR GB GR IE IT LI LU MC NL
PT SE**

(30) Priorité: **14.09.1992 FR 9210923**

(43) Date de publication de la demande:
**23.03.1994 Bulletin 1994/12**

(73) Titulaire: **LAFARGE FONDU INTERNATIONAL
92521 Neuilly sur Seine Cedex (FR)**

(72) Inventeurs:
• **Kessler, Benoît
F-26200 Montelimar (FR)**
• **Letourneux, Jean-Pierre
F-38090 Villefontaine (FR)**
• **Testud, Michel
F-69740 Genas (FR)**
• **Robin, Bernard
F-07400 Valvigneres (FR)**

(74) Mandataire: **Michelet, Alain et al
Cabinet Harlé et Phélip
7, rue de Madrid
75008 Paris (FR)**

(56) Documents cités:
**EP-A- 0 389 329          DE-A- 3 600 644
GB-A- 2 224 024          US-A- 3 170 677
US-A- 4 209 335**

• CHEMICAL ABSTRACTS, vol. 84, no. 12, 22 Mars
1976, Columbus, Ohio, US; abstract no. 79355k,
T. OKODA ET AL
• CHEMICAL ABSTRACTS, vol. 108, no. 24, 13 Juin
1988, Columbus, Ohio, US; abstract no. 209179h,
M. SAWAIDE ET AL. page 295 ;
• CHEMICAL ABSTRACTS, vol. 95, no. 26, 28
Décembre 1981, Columbus, Ohio, US; abstract
no. 224505t, TOA DORO KOGYO CO LTD page
300 ;
• CHEMICAL ABSTRACTS, vol. 113, no. 10, 3
Septembre 1990, Columbus, Ohio, US; abstract
no. 84241s, R. BRICKA ET AL.

## Description

La présente invention concerne un procédé de traitement des résidus d'incinération de déchets urbains et les produits obtenus par la mise en oeuvre de ce procédé.

Les déchets urbains sont de plus en plus volumineux. Ils sont habituellement incinérés et produisent des résidus.

Ces résidus se présentent essentiellement sous forme de mâchefers ou de cendres volantes provenant de l'épuration des fumées.

Ces résidus ne peuvent être stockés qu'après stabilisation physique ou chimique des nombreuses substances polluantes qu'ils comportent.

Le procédé de traitement de l'invention a pour objet l'amélioration de la fixation des substances polluantes des résidus d'incinération de déchets urbains. Il concerne préférentiellement des déchets sous forme finement divisée.

Il s'applique donc principalement aux résidus d'épuration des fumées, mais peut également être appliqué à tout autre résidu dans la mesure où un traitement préalable permet de le mettre sous une forme finement divisée, pulvérulente ou pâteuse, sous réserve que sa composition chimique soit compatible avec le traitement proposé.

Il a depuis longtemps été proposé de conditionner les résidus de fumée d'incinération en les incorporant à du ciment, ou à différentes compositions de liants hydrauliques.

Toutefois, les résidus de l'incinération contiennent des substances qui interagissent avec les liants hydrauliques et perturbent les phénomènes de durcissement. Les produits ainsi obtenus sont fragiles, susceptibles de présenter des fissures ou une porosité élevée. La fixation des produits polluants ainsi réalisée est insuffisante, et les phénomènes de lixiviation restent importants.

On a également proposé d'effectuer le conditionnement des résidus d'incinération des déchets en au moins deux étapes de stabilisation : une première étape au cours de laquelle les résidus sont mélangés avec un liant hydraulique, et éventuellement différents réactifs pour piéger chimiquement ou physiquement les éléments nocifs vis-à-vis de l'environnement, suivie d'une seconde étape, visant à renforcer l'action du liant hydraulique utilisé dans la première étape, qui consiste à ménager une barrière pour s'opposer aux phénomènes de lixiviation. Selon le cas, cette barrière est obtenue par enrobage à l'aide d'une composition à base de liant hydraulique, tel que du ciment Portland, ou d'un liant organique, tel qu'un stéarate ou du bitume.

De nombreux systèmes particuliers décrivant le conditionnement en deux étapes des résidus d'incinération ont été proposés. Une telle solution est décrite notamment dans la demande de brevet japonais JP-61 0910050, dans la demande internationale PCT-89/12498, et dans le brevet allemand DE-3 808 187.

La demande de brevet japonais JP-61 0910050 vise un procédé de fabrication d'agrégats, ou charges pour béton, à partir de cendres d'incinération.

Selon ce procédé, les cendres sont broyées, mélangées avec du ciment (environ 40 % en poids), et traitées jusqu'à ce que le ciment ait durci partiellement ou complètement. Le béton ainsi obtenu est alors réduit par broyage en particules, qui sont mélangées à nouveau avec du ciment (environ 40 % en poids), et éventuellement du sable. Après durcissement, une autre réduction est effectuée par broyage, en vue d'obtenir des particules de taille déterminée, ou des granulats qui seront utilisés pour la fabrication de béton.

Une telle solution n'est toutefois pas économique, car elle comprend plusieurs étapes de broyage, et elle requiert d'importantes quantités de ciment. Elle tend à résoudre les problèmes de prise et durcissement évoqués ci-dessus par une dilution des déchets dans du ciment. En raison des opérations de broyage, les interactions entre le liant hydraulique et les éléments nocifs pour la prise et le durcissement du liant sont favorisées aussi bien dans la première étape que dans la deuxième. C'est pourquoi, il n'est pas possible d'obtenir une stabilisation efficace de tous les déchets dans une structure dense.

Selon la demande internationale PCT-89/12498, les résidus d'incinération des déchets sont combinés à un agent de traitement spécifique aux métaux lourds, tels que de l'argile diatomée, qui est de préférence additionnée de ciment Portland. Les granulats obtenus sont ensuite enrobés à l'aide d'une composition cimentière. Cependant, même dans un tel cas, les éléments nocifs pour la prise et le durcissement présents dans les résidus, tels que les ions $Cl^-$, $SO_4^{--}$, ... peuvent gêner l'hydratation du ciment utilisé pour former les granulats et, par voie de conséquence, le ciment constituant la coquille d'enrobage, au moins à la périphérie de la coquille en contact avec le granulat. Ceci conduit à une absence de liaison physique ou chimique entre le granulat et la coquille d'enrobage; cette dernière est ainsi rendue fragile et, en cas de choc, de déformation ou de forte expansion, peut se briser.

La solution proposée par le brevet allemand DEA-3.808.187 consiste à broyer les déchets, à leur faire subir un traitement à la chaux, puis une granulation sous pression, un traitement thermique et un broyage. Le mélange obtenu est alors mélangé avec du ciment, puis à nouveau granulé. Il s'agit d'un procédé compliqué et onéreux.

Par ailleurs, il est connu par le document EP-A-0.389.329 d'insolubiliser et d'agglomérer des déchets d'épuration de fumées, riches en chaux, en les mélangeant avec un produit contenant au moins 60% de silice et/ou alumines, ainsi qu'avec une quantité d'eau comprise entre 15% et 160% du poids des déchets et dudit produit. Les compositions obtenus par de tels traitements sont basiques, le pH ayant des valeurs comprises entre 7 et 11,5.

Par le document US-A-4.209.335, il est connu de solidifier et consolider des déchets par l'utilisation de ciment hydraulique et d'additifs particuliers. De tels additifs particuliers contiennent au moins un sulfate, tel que le sulfate d'alumine, et au moins un sel de métal alcalin, tel que carbonate, bicarbonate ou silicate.

Par le document JP-95.224505 t (Chemical Abstracts, 1981, Volume 95), il est connu d'obtenir un ciment destiné à solidifier de la boue organique en utilisant comme additif ou réactif du $C_{12}A_7$ (selon la notation abrégée de la description de la présente invention).

Aucun des procédés connus jusqu'à présent ne donne donc complètement satisfaction et ne permet d'obtenir une stabilisation dans des conditions économiques raisonnables.

Le but de la présente invention est la mise au point d'un procédé de traitement des résidus d'incinération de déchets urbains, qui assure une stabilisation efficace de la plupart des éléments polluants et qui peut être mis en oeuvre dans de bonnes conditions économiques.

A cet effet, le procédé de traitement des résidus d'incinération de déchets urbains sous forme finement divisée, selon l'invention, comporte les étapes suivantes:

   a) on homogénéise les résidus à traiter;
   b) on fait une analyse chimique de leur composition, de manière à connaître leur teneur, au moins en calcium et en sels solubles.

Il faut s'assurer que les produits obtenus après homogénéisation sont compatibles avec le traitement proposé et, en particulier, qu'ils ne contiennent pas de substances minérales ou organiques à des concentrations qui perturbent les réactions chimiques.

   c) on optimise des quantités de réactifs destinés à être mélangés avec les résidus d'incinération en fonction des résultats de l'analyse chimique afin d'obtenir une fixation maximale des sels solubles sous forme d'aluminates;
   d) on mélange les résidus avec de l'eau et les quantités de réactifs déterminés contenant le $C_3A$ et la chaux;
   e) on laisse reposer et durcir le mélange.

Afin de simplifier l'expression des formules, on utilisera, par la suite, pour désigner les composés de calcium et d'aluminium tels que $C_3A$, $C_{12}A_7$, $CA_2$, $CA$, $C_4AH_{13}$, $C_3AH_6$, les notations abrégées cimentières:

   C représente CaO,
   A représente $Al_2O_3$,
   H représente $H_2O$.

Au cours de la réaction produite à partir de l'étape c) et pendant l'étape d), l'alumine active réagit chimiquement avec les composants des résidus d'incinération, et forme des aluminates de calcium hydratés qui se combinent chimiquement et forment des composés de solubilité réduite avec la plupart des ions polluants.

L'alumine active est ici un agent apportant l'élément aluminium, qui entre en réaction avec le calcium et les sels solubles et produit les aluminates. L'alumine active est soit apportée directement, soit par un ou plusieurs composés susceptibles de la libérer.

Selon l'invention le réactif contient du $C_3A$. Les réactions qui se produisent, par exemple avec les sulfates, sont les suivantes :

$$C_3A + 3(CaSO_4) + nH_2O \rightarrow C_3A(CaSO_4)_3 \cdot 32H_2O$$

conduisant à la formation d'ettringite ou trisulfoaluminate de calcium hydraté ($n \geq 32$) ;

$$C_3A + CaSO_4 + nH_2O \rightarrow C_3A\,CaSO_4 \cdot 11H_2O$$

conduisant à la formation de monosulfoaluminate de calcium hydraté ($n \geq 11$).

Des réactions analogues sont obtenues avec les autres anions, par exemple avec les chlorures, les carbonates et les nitrates, conduisant, de manière générale, à la formation d'hydrates de formule :

$$C_3A \cdot CaX \cdot nH_2O$$

ou

$$C_3 A. Ca Y_2. n H_2 O$$

où X et Y sont des anions, respectivement di et monovalents.

De bons résultats sont également obtenus par l'utilisation d'un mélange $C_3 A / C_{12} A_7$.

Ces réactions se produisent à température ambiante (entre 5 et 45° C environ). Une bonne cinétique est obtenue à une température inférieure à 20° C.

Elles permettent non seulement le piégeage d'anions, mais aussi la stabilisation de certains cations.

L'expérience a montré que l'on obtient de très bons résultats en apportant l'alumine active par $C_3 A$ seul, mais que la réaction a alors tendance à être ralentie au cours de son développement, les aluminates se formant autour des grains et ayant tendance à les isoler avant qu'ils n'aient réagi.

La mise en oeuvre de $C_{12} A_7$ permet d'éviter ce phénomène. Alors que les réactions commencent rapidement lors de la mise en oeuvre de $C_3 A$, puis tendent à ralentir, elles se développent à une vitesse plus uniforme lors de la mise en oeuvre de $C_{12} A_7$. Un réactif comportant simultanément $C_3 A$ et $C_{12} A_7$, utilisé pour apporter l'alumine active, donne les meilleurs résultats.

Les quantités de réactifs mélangés avec les résidus d'incinération au cours de l'étape c), de même que la quantité d'eau qui y est adjointe, sont optimisées en fonction des résultats de l'analyse chimique, objet de l'étape b), et de la qualité du traitement recherchée.

La quantité d'eau ajoutée dépend de l'humidité initiale des résidus. Elle est déterminée pour obtenir une consistance optimale lors du mélange. Un mélange préalable de l'eau et des résidus peut améliorer la qualité des résultats.

Les résidus d'incinération de déchets urbains pouvant avoir une composition très variable ; ils sont dans un premier temps homogénéisés. L'analyse chimique de leur composition est alors faite, par exemple par fluorescence X. En cas de doute résultant de l'analyse chimique, une vérification de la performance du traitement devra être faite.

La quantité d'alumine active, par exemple d'un mélange ($C_3 A / C_{12} A_7$) utilisé comme réactif, est déterminée en fonction des conditions stoechiométriques théoriques des réactions mentionnées plus haut.

De préférence, le réactif est introduit en excès et, par exemple, un excès pondéral compris entre 0 et 20 % donne d'excellents résultats sans pénaliser le coût de mise en oeuvre du procédé. L'essentiel étant d'obtenir une fixation maximale, si possible complète, des sels solubles sous forme d'aluminates.

Les résidus d'incinération d'ordures ménagères comportent généralement une forte proportion de chaux (le taux de CaO est le plus souvent compris entre 15 et 45 %).

Selon la quantité de chaux initialement présente dans les résidus, un apport complémentaire de chaux dans le réactif peut améliorer les réactions.

Celle-ci peut être introduite sous forme de chaux vive ou de chaux éteinte. La chaux vive est avantageusement frittée.

L'analyse de l'étape b) porte sur les principaux sels solubles, et en particulier sur les chlorures, sulfates, carbonates, nitrates....

Les réactions chimiques mentionnées plus haut permettent d'obtenir une stabilisation et une passivation améliorées des sels solubles. Elles permettent de plus de considérablement diminuer la solubilité des métaux lourds avec des concentrations habituelles.

Ceux-ci peuvent se substituer à certains ions calcium lors de la formation des hydrates, entraînant éventuellement une déformation du réseau cristallin.

Ils peuvent également être encapsulés par ces sels lors de leur formation et/ou être fortement insolubilisés sous forme d'hydroxyde grâce au pH basique du milieu.

Le pH des produits obtenus dépend du dosage de l'alumine active et de la chaux au cours de l'étape C). On obtient une bonne insolubilisation avec un pH compris entre 10,5 et 12.

En effet, la solubilité des métaux dépend fortement du pH de la solution. Cette solubilité peut être minimisée grâce à des pH basiques c'est-à-dire supérieurs à 7 par précipitation sous forme d'hydroxides métalliques.

On a constaté qu'un pH compris entre 10,5 et 12 permet d'obtenir une insolubilisation efficace pour les sels de cuivre, de cadmium, de zinc, d'argent, de plomb et pour les sels ferreux.

De nombreux aluminates peuvent être utilisés pour fournir l'alumine active nécessaire à ces réactions. On peut par exemple utiliser $C A_2$, $C A$, $C_{12} A_7$, $C_3 A$, des aluminates alcalins, des aluminoferrites.

Parmi les aluminates de calcium, on utilise de préférence ceux obtenus par un procédé de frittage plutôt que ceux obtenus par un procédé de fusion. En effet, les aluminates de calcium obtenus par un procédé de frittage peuvent plus facilement être broyés et présentent une plus grande réactivité.

Les aluminates de calcium hydratés, tels que $C_4 A H_{13}$ peuvent également conduire à la formation d'aluminates complexes par échanges d'ions.

Les ciments alumineux, tels que ceux de dénomination commerciale FONDU, SECAR, LDSF, peuvent être mis en oeuvre, ainsi que le Cubique-T, lequel est un aluminate de calcium cubique $C_3 A H_6$ décomposé thermiquement à environ 300° C en $C_{12} A_7$ et Ca (O H)$_2$. Ce produit présente directement la stoechiométrie nécessaire à la formation des aluminates complexes en cas d'une réaction avec un sel de calcium.

Le mélange des résidus avec l'eau et le réactif étant réalisé, on laisse reposer et durcir le mélange, de manière à ce que les réactions mentionnées plus haut se réalisent complètement. Une durée de 48 à 72 h peut s'avérer nécessaire.

On obtient alors un produit solide.

Il peut être stocké en l'état et, dans la plupart des cas, permet d'assurer une meilleure protection de l'environnement.

Il faut toutefois insister sur la grande variété de la composition des résidus, et sur le fait que le traitement proposé ne peut être universel.

Toutefois, sa résistance aux agressions des agents extérieurs des produits obtenus peut encore être améliorée par un enrobage complémentaire.

A cet effet, on peut complémentairement préparer, par exemple, le concassage et le criblage du produit solide obtenu, de manière à obtenir un granulat.

Les substances polluantes contenues dans ce granulat ont été traitées au cours des premières étapes. Un enrobage de ces granulats améliore leur résistance à la lixiviation.

La bonne fixation des substances polluantes habituelles permet d'éviter leur interaction avec la substance d'enrobage, et divers liants peuvent donc être mis en oeuvre pour l'enrobage.

De bons résultats ont été obtenus avec des liants hydrauliques et, par exemple, avec du ciment Portland.

En effet, les éléments qui auraient pu réagir avec les composés du ciment Portland pour ralentir ou interdire sa prise, tels que les composés du bore, les chlorures alcalins, les sels acides,... ont été inhibés fortement et ne peuvent donc plus interagir de façon significative avec le ciment.

On ne constate pas non plus de gonflements significatifs qui auraient pu être redoutés, compte tenu de la nature initiale des résidus.

Il est de plus particulièrement efficace de fournir aux granulats un environnement basique qui contribue à leur stabilisation et à l'insolubilisation des métaux lourds.

Selon l'utilisation ultérieure envisagée pour les produits obtenus, ceux-ci pourront être moulés, par exemple pour leur donner une forme parallélépipédique ou une forme sphérique.

Le mélange granulat-liant, avant sa prise, est avantageusement pressé et/ou vibré.

L'invention concerne également les produits obtenus par la mise en oeuvre du procédé décrit plus haut.

Plus particulièrement, dans ces produits, les anions des sels solubles sont, à raison d'au moins 40 %, liés chimiquement sous forme d'aluminates de calcium complexes.

Dans ces produits, les métaux lourds sont, à raison d'au moins 50 %, insolubilisés sous forme d'hydroxyde grâce au pH élevé du milieu.

Les exemples suivants présentent les résultats des tests de lixiviation conformes à la norme AFNOR NF X 31-210 modifiée, sur des produits résultant de la mise en oeuvre du procédé de l'invention.

Ils mentionnent le résultat de l'analyse chimique des résidus d'incinération de certains déchets urbains français, conformément à l'étape b) du procédé de l'invention, la composition du réactif, la composition du liant utilisé pour l'enrobage et le résultat des mesures de lixiviation.

Les analyses de métaux lourds ont été effectuées par I.C.P. (Inductively Coupled Plasma).

## EXEMPLE 1

- <u>Analyse chimique des éléments importants des résidus (%)</u> :

| Cl | 17,6 | CaO | 42,4 | SO$_3$ | 3,8 | | |
|---|---|---|---|---|---|---|---|
| Zn | 0,510 | Pb | 0,253 | Ni | 0,027 | Cd | 0,011 |
| As | 0,002 | Hg | 0,002 | | | | |

- <u>Réactif :</u>
  Quantité : 250 kg par tonne de résidus
  Composition : $C_3 A$ : 20 %    $C_{12} A_7$: 80 %    CaO : 0 %

- <u>Liant d'enrobage (kg par tonne de résidus) :</u>
  Ciment Portland : 470
- <u>Résultats de lixiviation après 28 jours de durcissement :</u>
  Fraction soluble : 3,2 % rapporté au déchet sec
  Chlorure : 8 g par kg de déchet sec
  Métaux lourds et arsenic : inférieurs au seuil de détection de l'appareil

**EXEMPLE 2**

- <u>Analyse chimique des éléments importants des résidus (%) :</u>

| Cl | 10,5 | CaO | 19,3 | $SO_3$ | 8,2 | | |
|----|------|-----|------|--------|-------|----|-------|
| Zn | 2,450 | Pb | 1,080 | Ni | 0,012 | Cd | 0,074 |
| As | 0,006 | Hg | 0,002 | | | | |

- <u>Réactif :</u>
  Quantité : 190 kg par tonne de résidus
  Composition : $C_3 A$ : 21 %     $C_{12} A_7$ : 79 %     CaO : 0 %
- <u>Liant d'enrobage (kg par tonne de résidus) :</u>
  Ciment Portland : 280
- <u>Résultats de lixiviation après 28 jours de durcissement :</u>
  Fraction soluble : 4,0 % rapporté au déchet sec
  Chlorure : 5 g par kg de déchet sec
  Métaux lourds et arsenic : inférieurs au seuil de détection de l'appareil

**EXEMPLE 3**

- <u>Analyse chimique des éléments importants des résidus (%) :</u>

| Cl | 10,2 | CaO | 16,2 | $SO_3$ | 16,1 | | |
|----|------|-----|------|--------|-------|----|-------|
| Zn | 2,413 | Pb | 0,971 | Ni | 0,012 | Cd | 0,005 |
| As | 0,004 | Hg | 0,003 | | | | |

- <u>Réactif :</u>
  Quantité : 250 kg par tonne de résidus
  Composition : $C_3 A$ : 16 % $C_{12} A_7$ : 84 % CaO : 0 %
- <u>Liant d'enrobaae (kg par tonne de résidus) :</u>
  Ciment Portland : 400
- <u>Résultats de lixiviation après 28 jours de durcissement :</u>
  Fraction soluble : 2,9 % rapporté au déchet sec
  Chlorure : 4 g par kg de déchet sec
  Métaux lourds et arsenic : inférieurs au seuil de détection de l'appareil

**EXEMPLE 4**

- <u>Analyse chimique des éléments importants des résidus (%) :</u>

| Cl | 14,7 | CaO | 37,6 | $SO_3$ | 4,7 | | |
|----|------|-----|------|--------|-------|----|-------|
| Zn | 0,790 | Pb | 0,290 | Ni | 0,012 | Cd | 0,013 |
| As | 0,002 | Hg | 0,001 | | | | |

- <u>Réactif :</u>
  Quantité : 200 kg par tonne de résidus
  Composition : $C_3A$ : 15 %       $C_{12}A_7$ : 85 %        CaO : 0 %
- <u>Liant d'enrobaae (kg par tonne de résidus) :</u>
  Ciment Portland : 360
- <u>Résultats de lixiviation après 28 jours de durcissement :</u>
  Fraction soluble : 3,8 % rapporté au déchet sec
  Chlorure : 5 g par kg de déchet sec
  Métaux lourds et arsenic : inférieurs au seuil de détection de l'appareil

**EXEMPLE 5**

- <u>Analyse chimique des éléments importants des résidus (%) :</u>

| Cl | 12,6 | CaO | 15,4 | SO₃ | 12,9 | | |
|----|------|-----|------|-----|------|----|-----|
| Zn | 3,650 | Pb | 1,700 | Ni | 0,016 | Cd | 0,074 |
| As | 0,004 | Hg | 0,002 | | | | |

- <u>Réactif :</u>
  Quantité : 310 kg par tonne de résidus
  Composition : $C_3A$ : 80 %       $C_{12}A_7$ : 0 %        CaO : 20 %
- <u>Liant d'enrobage (kg par tonne de résidus :</u>
  Ciment Portland : 410
- <u>Résultats de lixiviation après 28 jours de durcissement :</u>
  Fraction soluble : 5,5 % rapporté au déchet sec
  Chlorure : 9 g par kg de déchets secs
  Métaux lourds et arsenic : inférieurs au seuil de détection de l'appareil

**EXEMPLE 6**

- <u>Analyse chimique des éléments importants des résidus (%) :</u>

| Cl | 10,1 | CaO | 23,7 | SO₃ | 6,35 | | |
|----|------|-----|------|-----|------|----|-----|
| Zn | 1,055 | Pb | 0,575 | Ni | 0,006 | Cd | 0,021 |
| As | 0,003 | Hg | 0,002 | | | | |

- <u>Réactif :</u>
  Quantité : 200 kg par tonne de résidus
  Composition : $C_3A$ : 25 %       $C_{12}A_7$ : 75 %        CaO : 0 %
- <u>Liant d'enrobage (kg par tonne de résidus) :</u>
  Ciment Portland : 400
- <u>Résultats de lixiviation après 28 jours de durcissement :</u>
  Fraction soluble : 1,2 % rapporté au déchet sec
  Chlorure : 3 g par kg de déchets secs
  Métaux lourds et arsenic : inférieurs au seuil de détection de l'appareil

**EXEMPLE 7**

- <u>Analyse chimique des éléments importants des résidus (%) :</u>

| Cl | 9,5 | CaO | 22,4 | SO$_3$ | 5,9 | | |
|----|-----|-----|------|-----|-----|----|-----|
| Zn | 1,055 | Pb | 0,575 | Ni | 0,006 | Cd | 0,046 |
| As | 0,003 | Hg | 0,002 | | | | |

- Réactif :
  Quantité : 190 kg par tonne de résidus
  Composition : C$_3$A : 21 %        C$_{12}$A$_7$ : 79 %        CaO : 0 %
- Liant d'enrobage (kg par tonne de résidus) :
  Ciment Portland : 350
- Résultats de lixiviation après 28 jours de durcissement :
  Fraction soluble : 2,1 % rapporté au déchet sec
  Chlorure : 4 g par kg de déchets secs
  Métaux lourds et arsenic : inférieurs au seuil de détection de l'appareil

**Revendications**

1. Procédé de traitement des résidus d'incinération de déchets urbains comportant un apport de C$_3$A et de chaux, caractérisé en ce que les résidus sont sous forme finement divisée et que, dans l'ordre,

   a) on homogénéise les résidus à traiter
   b) on fait une analyse chimique de leur composition, de manière à connaître leur teneur, au moins en calcium et en sels solubles;
   c) on optimise des quantités de réactifs destinés à être mélangés avec les résidus d'incinération en fonction des résultats de l'analyse chimique afin d'obtenir une fixation maximale des sels solubles sous forme d'aluminates;
   d) on mélange les résidus avec de l'eau et les quantités de réactifs déterminés contenant le C$_3$A et la chaux;
   e) on laisse reposer et durcir le mélange.

2. Procédé de traitement selon la revendication 1, caractérisé en ce que le réactif contient du C$_{12}$A$_7$.

3. Procédé de traitement selon la revendication 1 ou 2, caractérisé en ce que, lors de l'étape b), on analyse au moins les chlorures, sulfates, carbonates, nitrates.

4. Procédé de traitement selon l'une des revendications 1 à 3, caractérisé en ce que, après l'étape e):

   f) on adapte la granulométrie du solide obtenu pour produire un granulat;
   g) on mélange le granulat à un liant, de manière à former un solide, dans lequel le granulat est enrobé.

5. Procédé de traitement selon la revendication 4, caractérisé en ce que le liant est un liant hydraulique.

6. Procédé de traitement selon la revendication 5, caractérisé en ce que le liant est un ciment Portland.

7. Procédé de traitement selon l'une des revendications 4 à 6, caractérisé en ce que le mélange granulat-liant est mis en forme avant sa solidification.

8. Procédé de traitement selon l'une des revendications 4 à 7, caractérisé en ce que le mélange granulat-liant est pressé.

9. Procédé de traitement selon l'une des revendications 4 à 8, caractérisé en ce que le mélange granulat-liant est vibré.

10. Produit susceptible d'être obtenu par le procédé selon l'une quelconque des revendications 1 à 9, caractérisé en ce que les sels solubles fixés sous forme d'aluminates sont des aluminates de calcium complexes et en ce que les ions des sels solubles sont liés chimiquement à raison d'au moins 40%.

11. Produit susceptible d'être obtenu par le procédé selon l'une quelconque des revendications 1 à 9, dans lequel le dosage de l'alumine active et de la chaux au cours de l'étape c) est choisi de façon que le pH du milieu soit compris entre 10,5 et 12, caractérisé en ce que les métaux lourds sont insolubilisés, à raison d'au moins 50% sous forme d'hydroxyde.

**Patentansprüche**

1. Verfahren zur Behandlung von Verbrennungsrückständen von Hausmüll, das eine Zufuhr von $C_3A$ und von Kalk umfaßt, dadurch gekennzeichnet, daß die Rückstände in feinteiliger Form vorliegen und daß man, in dieser Reihenfolge:

   a) die zu behandelnden Rückstände homogenisiert;

   b) eine chemische Analyse ihrer Zusammensetzung durchführt, so daß man ihren Gehalt wenigstens an Calcium und an löslichen Salzen kennt;

   c) die Mengen der Reagentien, die mit den Verbrennungsrückständen gemischt werden sollen, in Abhängigkeit der Ergebnisse der chemischen Analyse optimiert, um eine maximale Fixierung der löslichen Salze in Form von Aluminaten zu erhalten;

   d) die Rückstände mit Wasser und den ermittelten Mengen der Reagentien, die $C_3A$ und Kalk enthalten, mischt;

   e) das Gemisch ruhen und aushärten läßt.

2. Verfahren zur Behandlung gemäß Anspruch 1, dadurch gekennzeichnet, daß das Reagens $C_{12}A_7$ enthält.

3. Verfahren zur Behandlung gemäß Anspruch 1 oder 2, dadurch gekennzeichnet, daß man in Schritt b) wenigstens die Chloride, Sulfate, Carbonate und Nitrate analysiert.

4. Verfahren zur Behandlung gemäß einem der Ansprüche 1 bis 3, dadurch gekennzeichnet, daß man nach Schritt e):

   f) die Körnung des erhaltenen Feststoffs anpaßt, um ein Granulat zu erzeugen;

   g) das Granulat mit einem Bindemittel mischt, so daß ein Feststoff entsteht, in den das Granulat eingebettet ist.

5. Verfahren zur Behandlung gemäß Anspruch 4, dadurch gekennzeichnet, daß das Bindemittel ein hydraulisches Bindemittel ist.

6. Verfahren zur Behandlung gemäß Anspruch 5, dadurch gekennzeichnet, daß das Bindemittel ein Portlandzement ist.

7. Verfahren zur Behandlung gemäß einem der Ansprüche 4 bis 6, dadurch gekennzeichnet, daß das Gemisch aus Granulat und Bindemittel vor seiner Verfestigung in Form gebracht wird.

8. Verfahren zur Behandlung gemäß einem der Ansprüche 4 bis 7, dadurch gekennzeichnet, daß das Gemisch aus Granulat und Bindemittel gepreßt wird.

9. Verfahren zur Behandlung gemäß einem der Ansprüche 4 bis 8, dadurch gekennzeichnet, daß das Gemisch aus Granulat und Bindemittel gerüttelt wird.

10. Produkt, das nach dem Verfahren gemäß einem der Ansprüche 1 bis 9 erhalten werden kann, dadurch gekennzeichnet, daß es sich bei den in Form von Aluminaten fixierten löslichen Salzen um komplexe Calciumaluminate handelt und daß die Ionen der löslichen Salze zu wenigstens 40% chemisch gebunden sind.

11. Produkt, das nach dem Verfahren gemäß einem der Ansprüche 1 bis 9 erhalten werden kann, wobei die Bestimmung von aktivem Aluminiumoxid und Kalk im Verlaufe von Schritt c) so gewählt wird, daß der pH-Wert des Mediums zwischen 10,5 und 12 liegt, dadurch gekennzeichnet, daß die Schwermetalle zu wenigstens 50% in Form von Hydroxiden unlöslich gemacht werden.

## Claims

1. Treatment method of urban waste incineration residues with addition of $C_3A$ and lime, characterised in that the residues are in a finely divided form and in that sequentially:

   a) the residues to be treated are homogenized;
   b) their composition is analysed chemically in order to know their content, at least in calcium and in soluble salts;
   c) the amounts of reagents provided to be mixed with incineration residues according to the results of the chemical analysis are optimised in order to obtain a maximal fixation of soluble salts as aluminates;
   d) the residues with water and determined amounts of reagents containing $C_3A$ and lime are mixed;
   e) the mixture is left to set and to harden.

2. Treatment method according to claim 1, characterised in that the reagent contains $C_{12}A_7$.

3. Treatment method according to claims 1 or 2, characterised in that, during step b), at least the chlorides, sulphates, carbonates and nitrates are analysed.

4. Treatment method according to any one of claims 1 to 3, characterised is that after step e):

   f) the granulometry of the solid obtained is adapted in order to produce a granulate;
   g) the granulate is mixed to a binding agent, in order to form a solid, in which the granulate is coated.

5. Treatment method according to claim 4, characterised in that the binding agent is a hydraulic binder.

6. Treatment method according to claim 5, characterised in that the binding agent is a Portland cement.

7. Treatment method according to any one of claims 4 to 6, characterised in that the granulate/binding agent mixture is shaped up before solidification.

8. Treatment method according to any one of claims 4 to 7, characterised in that the granulate/binding agent mixture is pressed.

9. Treatment method according to any one of claims 4 to 8, characterised in that the granulate/binding agent mixture is vibrated.

10. Product liable to be obtained by the method according to any one of claims 1 to 9, characterised in that the soluble fixed salts as aluminates are complex calcium aluminates and in that the ions of the soluble salts are bound chemically at the ratio of at least 40%.

11. Product liable to be obtained by the method according to any one of claims 1 to 9, wherein the content of active alumine and lime during step c) is such that the pH is between 10.5 and 12, characterised in that the heavy metals are made insoluble as hydroxide at the ratio of at least 50%.